# EUROPEAN PATENT SPECIFICATION

(11) **EP 2 985 310 B1**
(45) Date of publication and mention of the grant of the patent: **21.02.2018**
(21) Application number: 14791544.1
(22) Date of filing: 25.04.2014
(51) Int. Cl.: C08L 21/00, B60C 1/00, C08K 3/22, C08K 3/20, C08L 9/00, C08L 7/00, B60C 11/01, B60C 11/00

(54) **PNEUMATIC TIRE**
LUFTREIFEN
PNEU

(30) Priority: 30.04.2013 JP 2013095530
(43) Date of publication of application: 17.02.2016
(73) Proprietor: Sumitomo Rubber Industries, Ltd., Kobe-shi, Hyogo 651-0072 (JP)
(72) Inventor: MIYAZAKI Tatsuya, Kobe-shi Hyogo 651-0072 (JP); TOKIMUNE Ryuichi, Kobe-shi Hyogo 651-0072 (JP)
(74) Representative: Manitz Finsterwald Patentanwälte PartmbB
(86) International application number: PCT/JP2014/061655
(87) International publication number: WO 2014/178336

(56) References cited:
- EP-A1- 0 837 096
- EP-A1- 1 112 961
- EP-A1- 1 844 958
- EP-A1- 2 193 932
- WO-A1-2007/083765
- WO-A1-2013/027690
- JP-A- H03 148 304
- JP-A- 2000 159 935
- JP-A- 2001 019 806
- JP-A- 2001 049 034
- JP-A- 2003 246 885
- JP-A- 2003 253 044
- JP-A- 2008 174 638
- JP-A- 2012 092 242
- JP-A- 2012 116 982
- US-A1- 2002 198 300

## Description

### TECHNICAL FIELD

The present invention relates to a pneumatic tire.

### BACKGROUND ART

Pneumatic tires consist of various components including a tread, a wing, a sidewall, and the like. These components are provided with various appropriate properties. The tread which makes contact with the road surface needs to have wet grip performance and the like for safety and other reasons. A method has been proposed which improves these properties by addition of aluminum hydroxide. Unfortunately, this method deteriorates abrasion resistance and is thus rarely employed in the production of tires for general public roads.

Other methods are, for example, a method of increasing the styrene content or the vinyl content in solution-polymerized styrene-butadiene rubber, a method of using modified solution-polymerized styrene-butadiene rubber to control the tan δ curve, a method of increasing the amount of silica to provide a higher tan δ peak, a method of adding a liquid resin, and the like. At present, it is still difficult to improve wet grip performance while maintaining other physical properties.

Moreover, in general, formulations for rubber compositions for various components with excellent properties are individually designed using laboratory testing and the resulting components are then assembled with one another to form a pneumatic tire (see Patent Literatures 1 to 3). However, even if a pneumatic tire is formed using a tread rubber composition that exhibits excellent properties such as abrasion resistance in laboratory testing, the finished bonding surface between the tread and its adjacent wing or sidewall after vulcanization is sometimes in poor condition (e.g. curling, peel-off, or falling of a thin film portion of the wing or sidewall).

Specifically, a thin film phenomenon, in which the wing or sidewall extends thinly on the tread, sometimes occurs to form a thin film in the ground contact area of the tread during curing. This results in problems such as extremely reduced initial grip performance in road testing, peel-off of the thin film in the form of scales, and the like. Since in tests such as wet grip grading in accordance with the JATMA standards, the results from running tests performed in an initial running-in period are used, poor initial grip performance means a great reduction in the product's value.

Thus, there is a need for a pneumatic tire that has a good finished bonding surface between the tread and the wing or sidewall while ensuring wet grip performance and abrasion resistance for the tread, and further ensuring properties required for the wing, sidewall, or other components.

### CITATION LIST

### PATENT LITERATURE

Patent Literature 1: JP 4308289 B
Patent Literature 2: JP 2008-24913 A
Patent Literature 3: JP 4246245 B

### SUMMARY OF INVENTION

### TECHNICAL PROBLEM

The present invention aims to solve the above problems and provide a pneumatic tire having an excellent finished bonding surface between the tread and its adjacent wing or sidewall while ensuring properties required for tires, such as wet grip performance, abrasion resistance, and resistance to degradation over time.

### SOLUTION TO PROBLEM

The present invention relates to a pneumatic tire, including a tread and a wing or sidewall adjacent to the tread,
the tread being formed from a tread rubber composition that has an amount of aluminum hydroxide having an average particle size of 0.69 µm or smaller and a nitrogen adsorption specific surface area of 10 to 50 m²/g of 1 to 60 parts by mass, and a net sulfur content derived from crosslinking agents of 0.56 to 1.15 parts by mass, each per 100 parts by mass of a rubber component in the tread rubber composition,
the wing or sidewall being formed from a wing or sidewall rubber composition that has a net sulfur content derived from crosslinking agents of 1.3 to 2.5 parts by mass per 100 parts by mass of a rubber component in the wing or sidewall rubber composition,
the net sulfur content derived from crosslinking agents in the tread rubber composition and the net sulfur content derived from crosslinking agents in the wing or sidewall rubber composition satisfying the following relationship:
(the net sulfur content derived from crosslinking agents in the wing or sidewall rubber composition)/(the net sulfur content derived from crosslinking agents in the tread rubber composition) ≤ 2.5.

The tread preferably contains, per 100 parts by mass of the rubber component, 20 to 130 parts by mass of wet silica having a nitrogen adsorption specific surface area of 40 to 350 m²/g.

The tread preferably contains, based on 100% by mass of the rubber component, 20% to 70% by mass of polybutadiene rubber synthesized with a rare earth catalyst.

### ADVANTAGEOUS EFFECTS OF INVENTION

The present invention relates to a pneumatic tire that includes a tread and a wing or sidewall adjacent to the tread. Since the amount of a specific aluminum hydroxide and the net sulfur content derived from crosslinking agents in the tread formulation, and the net sulfur content derived from crosslinking agents in the wing or sidewall is set to satisfy specific conditions, the pneumatic tire provided by the present invention has an excellent finished bonding surface between the tread and its adjacent wing or sidewall while ensuring properties required for tires, such as wet-grip performance, abrasion resistance, and resistance to degradation over time.

### BRIEF DESCRIPTION OF DRAWINGS

Fig. 1 is a schematic view illustrating an instantaneous reaction occurring between aluminum hydroxide on the tire surface and silica on the road surface, or bonding between silica and aluminum hydroxide during kneading.
Fig. 2 shows an exemplary schematic cross-sectional view of the shoulder portion and its vicinity of a vulcanized tire for passenger vehicles having a TOS structure.
Fig. 3 shows an exemplary schematic cross-sectional view of the shoulder portion and its vicinity of a vulcanized tire for heavy load vehicles, light trucks, large SUVs, and large passenger vehicles having a SOT structure.
Fig. 4 shows an exemplary schematic cross-sectional view of the bonding area between the tread and its adjacent wing or sidewall after vulcanization.
Fig. 5 shows an exemplary schematic cross-sectional view illustrating the phenomenon of migration of the pure sulfur component; and an exemplary distribution graph showing the net sulfur content in cross-sections (1) and (2) of the wing after vulcanization.

### DESCRIPTION OF EMBODIMENTS

The pneumatic tire of the present invention includes a tread and a wing or sidewall adjacent to the tread. The tread is formed from a tread rubber composition having a certain amount of a specific aluminum hydroxide and a certain net sulfur content derived from crosslinking agents. Moreover, the wing or sidewall is formed from a wing or sidewall rubber composition having a specific net sulfur content derived from crosslinking agents. Furthermore, the ratio of the net sulfur content derived from crosslinking agents in the tread rubber composition and the net sulfur content derived from crosslinking agents in the wing or sidewall rubber composition satisfies a specific relationship.

As used herein, the amounts of chemicals, such as a crosslinking agent or aluminum hydroxide, in the tread, wing, or sidewall rubber composition each refer to the amount compounded (or added) into the uncured rubber composition. In other words, the amounts of chemicals in the tread, wing, or sidewall rubber composition mean the theoretical amounts of chemicals in the unvulcanized tread, wing, or sidewall rubber composition. The "theoretical amount" refers to the amount of a chemical introduced in the preparation of the unvulcanized rubber composition.

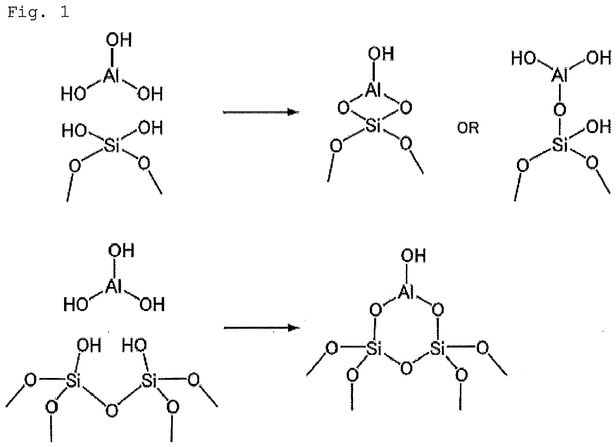

Wet grip performance can be improved by adding, to the tread, aluminum hydroxide having a certain nitrogen adsorption specific surface area and a specific average particle size. This effect is presumably produced by the following effects (1) to (3).
(1) During kneading, the added aluminum hydroxide is partially converted to alumina having a Mohs hardness equal to or higher than that of silica, or the aluminum hydroxide binds to silica and is thereby immobilized. Such alumina aggregates or aluminum hydroxide is considered to provide an anchoring effect, thereby enhancing wet grip performance.
(2) As a result of the contact (friction) between silicon dioxide on the road surface and aluminum hydroxide on the tire surface during running, covalent bonds are considered to be instantaneously formed as shown in Fig. 1, enhancing wet grip performance.
(3) A part of the surface of tires on wet roads makes contact with the road surface through a water film. Usually, such a water film is considered to be evaporated by the friction heat generated at sites where the tire makes direct contact with the road surface. When aluminum hydroxide is incorporated, the friction heat is considered to contribute to the progress of an endothermic reaction of aluminum hydroxide on the tire surface as shown by "Al(OH)₃ → 1/2 Al₂O₃ + 3/2 H₂O", thereby resulting in reduced evaporation of the water film (moisture). If the water film is evaporated, a void space is formed between the tire surface and the road surface and thus the contact area between the road surface and the tire is reduced, resulting in a decrease in wet grip performance.

Thus, wet grip performance is improved by the effects of the addition of aluminum hydroxide. However, the addition usually deteriorates abrasion resistance. Hence, it is difficult to achieve a good balance of these properties. In the pneumatic tire of the present invention, since a certain amount of a specific aluminum hydroxide is added to the tread, and the net sulfur contents derived from crosslinking agents of the tread and the wing or sidewall and their ratio are controlled, the deterioration of abrasion resistance is reduced, and therefore a balanced improvement in abrasion resistance and wet grip performance is achieved. Further, if rare earth-catalyzed polybutadiene rubber is used in the rubber component of the tread, then abrasion resistance is markedly improved, resulting in a further improvement of the balance of the properties.

Moreover, the net sulfur content in the tread formulation is controlled to provide good adhesive strength or a good finished bonding surface between the tread and its adjacent wing or sidewall while ensuring properties required for the wing, sidewall, or other components.

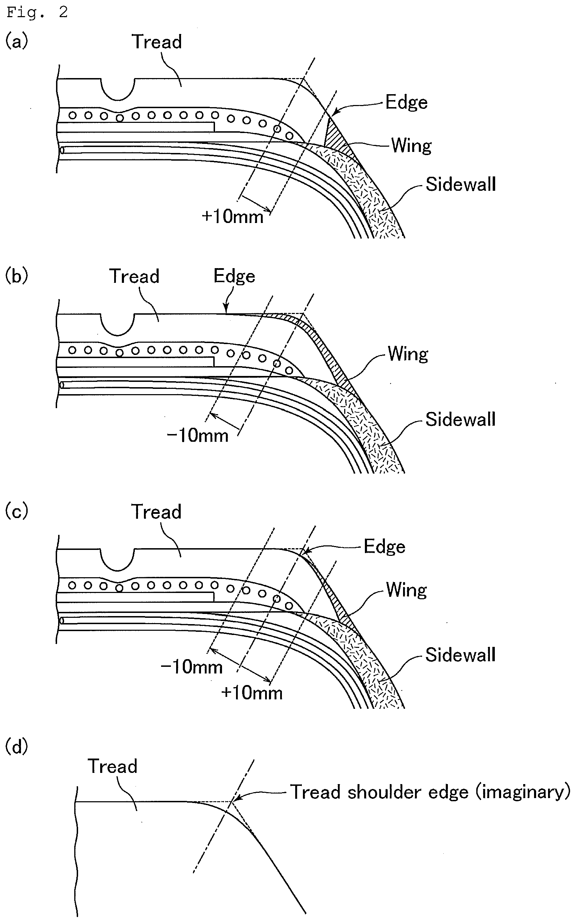

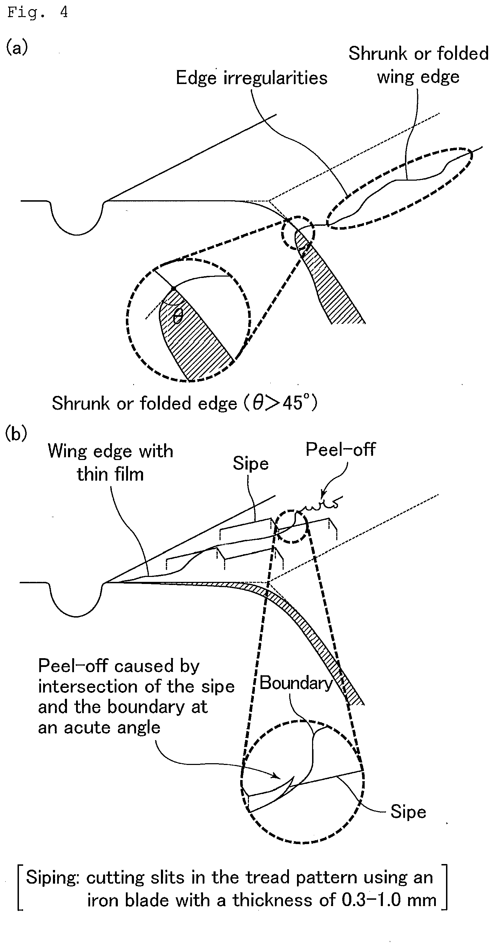

Pneumatic tires for passenger vehicles generally have the structure shown in Fig. 2, i.e., a tread-over-sidewall (TOS) structure in which the tread and the wing are adjacent to each other. Accordingly, after vulcanization of an unvulcanized tire having this structure, the upper edge of the wing should be located, as shown in Fig. 2(c), within a range of about ±10 mm from the tread shoulder edge (reference) shown in Fig. 2(d). However, the following phenomena may occur in some cases after vulcanization: a thin film phenomenon (above the -10 mm position) in which the ground contact portion of the tread is largely covered with the wing as shown in Fig. 2(b); and a converse phenomenon (below the +10 mm position) in which the finished wing edge has a round shape due to shrinkage or folding as shown in Fig. 2(a). The thin film phenomenon leads to problems such as reduced initial grip performance as mentioned above, and poor condition and increased variation of the finished wing edge, as well as peel-off in the tread ground contact portion as shown in Fig. 4(b). Moreover, poor flow of the rubber compound forming the wing edge leads to problems such as edge irregularities of the wing shown in Fig. 4(a), poor condition of the finished wing edge (cracking at the wing edge) due to the finished wing edge having a round shape due to shrinkage or folding (as a rough indication, θ > 45°), difference in hue, and difference in ozone cracking resistance. In contrast, the present invention remedies these problems by setting the net sulfur contents derived from crosslinking agents added to the tread or wing to specific amounts and controlling them to satisfy a specific relationship.

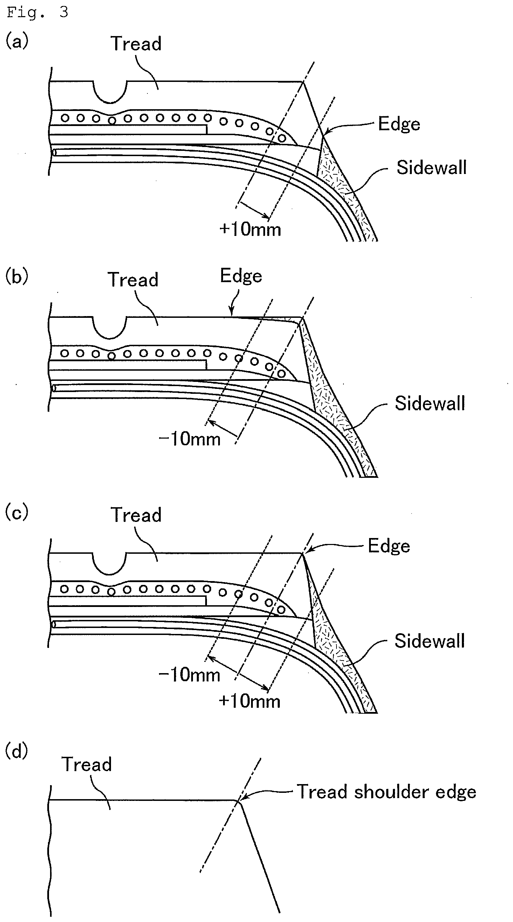

On the other hand, the structure shown in Fig. 3, i.e., a sidewall-over-tread (SOT) structure in which the tread is adjacent to the sidewall is generally used in pneumatic tires for heavy load vehicles such as trucks and busses, pneumatic tires for light trucks, pneumatic tires for large SUVs, pneumatic tires for large passenger vehicles, and the like. Accordingly, after vulcanization, the upper edge of the sidewall should be located, as shown in Fig. 3(c), within a range of about ±10 mm from the tread shoulder edge (reference) shown in Fig. 3(d). However, as is the case with the pneumatic tires for passenger vehicles, there may be phenomena in which the tread is covered with the sidewall as shown in Fig. 3(b), and in which the sidewall fails to roll up properly and the finished sidewall edge has a round shape due to shrinkage or folding as shown in Fig. 3(a). The same problems as described above also occur in these cases. However, these problems are similarly remedied by setting the net sulfur contents derived from crosslinking agents added to the tread or sidewall to specific amounts and controlling them to satisfy a specific relationship.

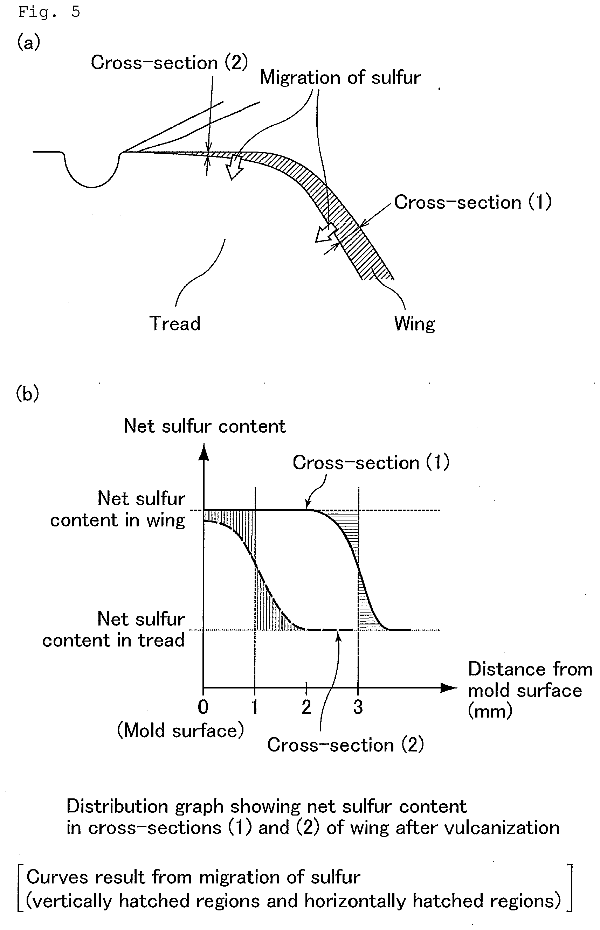

The thin film phenomenon shown in Fig. 2(b) can be promoted by the difference in the net sulfur content between thin and thick portions of the wing caused by migration of the pure sulfur component from the wing to the tread during vulcanization. Specifically, during vulcanization, the pure sulfur component migrates from the wing to the tread as shown in Fig. 5(a) showing a schematic cross-sectional view of the phenomenon of migration of the pure sulfur component. This creates a distribution of net sulfur content in some portions of the wing as shown in Fig. 5(b) representing a distribution graph showing the net sulfur content in cross-section (1) of a relatively thick portion and in cross-section (2) of a relatively thin portion of the wing after vulcanization. Moreover, as shown in Fig. 5(b), in cross-section (2) of the thin portion of the wing, a large amount of sulfur migrates into the tread at a distance of, for example, 1.0 mm from the mold surface. As a result, the net sulfur content in the thin portion becomes lower than the designed value. Accordingly, cure of this portion is delayed so that curing is not allowed to proceed, and this portion thus remains soft for a prolonged period of time. During this period, since curing in the tread is accelerated by the sulfur migrating thereinto, the tread pushes and further stretches the wing thinly. Such a vicious circle causes the formation of a thin film of the wing. In contrast, in the present invention, the net sulfur content in adjacent components is controlled to alleviate the phenomenon of delay in initial cure of the wing or sidewall and reduce the migration of crosslinking agents from these components to the tread during vulcanization of the tire. Therefore, the thin film phenomenon and other problems can be prevented while ensuring properties required for tires, such as initial grip performance and abrasion resistance.

The pneumatic tire of the present invention includes a tread and a wing or sidewall adjacent to the tread.

The tread is a component that makes direct contact with the road surface. The wing is a component located between the tread and the sidewall at the shoulder portion. Specifically, they are shown in Figs. 1 and 3 of JP 2007-176267 A, and elsewhere. The sidewall is a component extending from the shoulder portion to the bead portion, located outside the carcass. Specifically, it is shown in Fig. 1 of JP 2005-280612 A, Fig. 1 of JP 2000-185529 A, and elsewhere.

In the present invention, the tread, wing, and sidewall are respectively formed from a tread rubber composition, a wing rubber composition, and a sidewall rubber composition, each of which contains a crosslinking agent.

The crosslinking agent may be a sulfur-containing compound having a cross-linking effect. Examples include sulfur crosslinking agents, sulfur-containing hybrid crosslinking agents, and silane coupling agents intended to be added in the final kneading step.

The sulfur crosslinking agent may be sulfur commonly used for vulcanization in the rubber field. Specific examples include powdered sulfur, precipitated sulfur, colloidal sulfur, insoluble sulfur, and highly dispersible sulfur.

Examples of the sulfur-containing hybrid crosslinking agent include alkylsulfide crosslinking agents such as alkylphenol-sulfur chloride condensates, hexamethylene-1,6-bis(thiosulfate) disodium salt dihydrate, and 1,6-bis(N,N'-dibenzylthiocarbamoyldithio)hexane; and dithiophosphates. More specifically, products such as Tackirol V200 produced by Taoka Chemical Co., Ltd., DURALINK HTS produced by Flexsys, Vulcuren VP KA9188 produced by LANXESS, and Rhenogran SDT-50 (dithiophosphoryl polysulfide) produced by Rhein Chemie are commercially available.

Furthermore, silane coupling agent(s) intended to be compounded (or added) in the final kneading step are also regarded as the crosslinking agent in the present invention, while silane coupling agent(s) compounded in the base kneading step are not regarded as such because they preferentially react with silica.

The silane coupling agent may be, for example, a sulfur-containing (sulfide bond-containing) compound that has been used in combination with silica in the rubber industry. Examples include sulfide, mercapto, vinyl, amino, glycidoxy, nitro, and chloro silane coupling agents. More specifically, products such as Si69 and Si75 produced by Evonik are commercially available.

In the present invention, the following relationship is satisfied between the net sulfur content derived from crosslinking agents in the tread rubber composition and the net sulfur content derived from crosslinking agents in the wing rubber composition to be adjacent thereto, or between the net sulfur content derived from crosslinking agents in the tread rubber composition and the net sulfur content derived from crosslinking agents in the sidewall rubber composition to be adjacent thereto:
(the net sulfur content derived from crosslinking agents in the wing or sidewall rubber composition)/(the net sulfur content derived from crosslinking agents in the tread rubber composition) ≤ 2.5.

If the ratio is higher than 2.5, the initial cure rate t10 of the wing or sidewall is likely to be delayed, resulting in the thin film phenomenon and peel-off damage.

The net sulfur content ratio (the ratio of addition of the pure sulfur component) is not particularly limited as long as it is 2.5 or lower. It is preferably in the range of 0.75 to 2.4, and more preferably in the range of 1.0 to 2.3. In the present invention, the net sulfur content derived from crosslinking agents refers to the total amount of sulfur contained in all the crosslinking agents compounded (or added).

Moreover, in the present invention, the following relationship is preferably satisfied between the initial cure rate (t10) of the tread rubber composition and the initial cure rate (t10) of the wing or sidewall rubber composition: 0.4 ≤ (t10 of the wing or sidewall rubber composition)/(t10 of the tread rubber composition) ≤ 2.5.

In this case, the thin film phenomenon can be suppressed. The t10 ratio (ranging from 0.4 to 2.5) is more preferably in the range of 0.5 to 2.3.

The tread rubber composition and the wing or sidewall rubber composition used in the present invention are described below.

### (Tread rubber composition)

The tread rubber composition contains aluminum hydroxide having a specific average particle size and a certain nitrogen adsorption specific surface area.

The aluminum hydroxide has an average particle size of 0.69 µm or smaller, preferably 0.20 to 0.65 µm, and more preferably 0.25 to 0.60 µm. If the average particle size is larger than 0.69 µm, abrasion resistance and wet grip performance may be reduced. The average particle size of aluminum hydroxide is a number average particle size which is measured with a transmission electron microscope.

The aluminum hydroxide has a nitrogen adsorption specific surface area (N₂SA) of 10 to 50 m²/g. If the N₂SA is out of this range, abrasion resistance and wet grip performance may be deteriorated. The lower limit of the N₂SA is preferably 12 m²/g or greater, and more preferably 14 m²/g or greater, while the upper limit thereof is preferably 45 m²/g or smaller, more preferably 40 m²/g or smaller, still more preferably 29 m²/g or smaller, and particularly preferably 19 m²/g or smaller. The N₂SA of aluminum hydroxide is determined by the BET method in accordance with ASTM D3037-81.

In order to ensure abrasion resistance and wet grip performance for tires and to reduce metal wear of Banbury mixers or extruders, the aluminum hydroxide preferably has a Mohs hardness of 1 to 8, more preferably 2 to 7. Mohs hardness, which is one of mechanical properties of materials, is a measure commonly used through the ages in mineral-related fields. Mohs harness is measured by scratching a material (e.g. aluminum hydroxide) to be analyzed for hardness with a reference material, and determining the presence or absence of scratches. If aluminum hydroxide is converted to alumina, its Mohs hardness is increased to a value equal to or higher than that of silica.

The aluminum hydroxide may be a commercial product that has the above-mentioned average particle size and N₂SA properties, and may also be, for example, aluminum hydroxide having been processed, for example, ground, into particles having the above properties. The grinding may be performed by conventional methods, such as wet grinding or dry grinding using, for example, a jet mill, a current jet mill, a counter jet mill, a contraplex mill, or the like.

The amount of the aluminum hydroxide per 100 parts by mass of the rubber component is 1 part by mass or more, preferably 2 parts by mass or more, and more preferably 3 parts by mass or more. If the amount is less than 1 part by mass, sufficient wet grip performance may not be obtained. Also, the amount is 60 parts by mass or less, preferably 55 parts by mass or less, and more preferably 50 parts by mass or less. If the amount is more than 60 parts by mass, abrasion resistance may be deteriorated to an extent that cannot be compensated by controlling other compounding agents.

The total net sulfur content derived from crosslinking agents in the tread rubber composition is 0.56 to 1.15 parts by mass per 100 parts by mass of the rubber component. If the content is less than 0.56 parts by mass, the amount of sulfur that migrates from the wing or sidewall to the tread tends to be large, causing a delay in the t10 of the wing or sidewall rubber. As a result, the finished bonding surface tends to be in poor condition. If the content is more than 1.25 parts by mass, the tread rubber tends to have poor abrasion resistance and undergo more degradation over time. The total net sulfur content is 0.56 to 1.15 parts by mass, and preferably 0.6 to 1.10 parts by mass.

Any rubber component may be used in the tread rubber composition. Examples include isoprene-based rubbers such as natural rubber (NR) and polyisoprene rubber (IR); and diene rubbers such as polybutadiene rubber (BR), styrene-butadiene rubber (SBR), styrene-isoprene-butadiene rubber (SIBR), chloroprene rubber (CR), and acrylonitrile-butadiene rubber (NBR). Among these, isoprene-based rubbers, BR, and SBR are preferred as they provide good durability while ensuring good handling stability, good fuel economy, and good elongation at break. Particularly for summer tires, BR and SBR are preferably used in combination. For studless winter tires for which performance on ice is also important, BR and an isoprene-based rubber are preferably used in combination.

Any BR may be used, and examples include those commonly used in the tire industry, such as high-cis BR, e.g., BR1220 available from ZEON CORPORATION and BR150B available from Ube Industries, Ltd., 1,2-syndiotactic polybutadiene crystal (SPB)-containing BR, e.g., VCR412 and VCR617 available from Ube Industries, Ltd., high-vinyl BR, e.g., Europrene BR HV80 available from Polimeri Europa, and BR synthesized with a rare earth catalyst (rare earth-catalyzed BR). Tin-modified polybutadiene rubber (tin-modified BR), which is modified by a tin compound, can also be used. Among these, rare earth-catalyzed BR is preferred as it provides good durability while ensuring good handling stability, good fuel economy, and good elongation at break.

Conventional rare earth-catalyzed BR may be used, and examples include those synthesized with rare earth catalysts (catalysts containing a lanthanide rare earth compound, an organic aluminum compound, an aluminoxane, or a halogen-containing compound, optionally with a Lewis base) and the like. In particular, Nd-catalyzed BR, which is synthesized with a neodymium catalyst, is preferred.

The amount of BR based on 100% by mass of the rubber component is preferably 20% by mass or more, more preferably 25% by mass or more, and further preferably 30% by mass or more. The amount of BR is preferably 70% by mass or less, more preferably 65% by mass or less, and still more preferably 60% by mass or less. When the amount of BR falls within the range described above, good abrasion resistance, handling stability, fuel economy, elongation at break, and performance on snow can be ensured. The preferred amount of rare earth-catalyzed BR is as described above.

The NR as an isoprene-based rubber may be one commonly used in the tire industry, such as SIR20, RSS#3, or TSR20. The IR may also be one commonly used in the tire industry, such as IR2200. Any SBR may be used, and examples include emulsion-polymerized SBR (E-SBR), solution-polymerized SBR (S-SBR), and modified SBR for silica prepared by modification with a compound interactive with silica. Among these, E-SBR and modified SBR for silica are preferred. The E-SBR contains a large amount of high molecular weight components and offers excellent abrasion resistance and excellent elongation at break, while the modified SBR for silica interacts strongly with silica and thereby allows silica to be well dispersed so that fuel economy and abrasion resistance can be improved.

The modified SBR for silica may be a conventional one, such as SBR having a polymer chain end or polymer backbone modified with any of various modifiers. Examples include modified SBRs described in, for example, JP 2010-077412 A, JP 2006-274010 A, JP 2009-227858 A, JP 2006-306962 A, and JP 2009-275178 A. Specifically, suitable is modified SBR having a Mw of 1.0 × 10⁵ to 2.5 × 10⁶, obtained by reaction with a modifier represented by the following Formula (1): 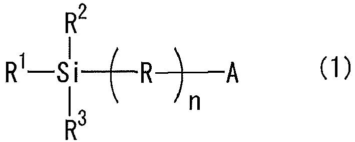 wherein n represents an integer of 1 to 10; R represents a divalent hydrocarbon group such as -CH₂-; R¹, R², and R³ each independently represent a C1-C4 hydrocarbyl group or a C1-C4 hydrocarbyloxy group, and at least one of R¹, R², or R³ is the hydrocarbyloxy group; and A represents a functional group containing a nitrogen atom.

In the present invention, the modified SBR for silica preferably has a bound styrene content of 25% by mass or more, more preferably 27% by mass or more. If the bound styrene content is less than 25% by mass, wet grip performance tends to be poor. Also, the bound styrene content is preferably 50% by mass or less, more preferably 45% by mass or less, and still more preferably 40% by mass or less. If the bound styrene content is more than 50% by mass, fuel economy may be deteriorated.

The styrene content is determined by H¹-NMR.

In the tread rubber composition, the combined amount of isoprene-based rubber and SBR is preferably 25% to 100% by mass based on 100% by mass of the rubber component. For use in summer tires, it is preferred to use SBR in the range described above, while for use in studless winter tires, it is preferred to use an isoprene-based rubber in the range described above.

The tread rubber composition may contain carbon black and/or silica. Particularly in view of the balance between wet grip performance and abrasion resistance, the tread rubber composition preferably contains silica. Examples of the silica include, but are not limited to, dry silica (silicic anhydride) and wet silica (hydrous silicic acid). Wet silica is preferred because it has a large number of silanol groups.

The silica preferably has a nitrogen adsorption specific surface area of 40 m²/g or greater, more preferably 80 m²/g or greater, and still more preferably 110 m²/g or greater. Also, the nitrogen adsorption specific surface area is preferably 350 m²/g or smaller, and more preferably 250 m²/g or smaller. When the N₂SA falls within the range described above, the effect of the present invention can be sufficiently achieved. The nitrogen adsorption specific surface area of silica is determined as mentioned for the aluminum hydroxide.

The amount of silica per 100 parts by mass of the rubber component is preferably 20 parts by mass or more, more preferably 30 parts by mass or more, and still more preferably 40 parts by mass or more. If the amount is less than 20 parts by mass, sufficient abrasion resistance and sufficient wet grip performance may not be obtained. The amount is also preferably 130 parts by mass or less, more preferably 125 parts by mass or less, and still more preferably 120 parts by mass or less. If the amount is more than 130 parts by mass, fuel economy may be reduced.

When carbon black and/or silica is added, their amounts may be appropriately set depending on the properties required for treads, such as wet grip performance or abrasion resistance. The combined amount of these materials is preferably 30 to 180 parts by mass, and more preferably 45 to 135 parts by mass, per 100 parts by mass of the rubber component.

The tread rubber composition in the present invention may contain a resin as a softener. Examples of the resin include C5 petroleum resins, C9 petroleum resins, terpene-based resins, coumarone-indene resins, and aromatic vinyl polymers. Among these, terpene-based resins, coumarone-indene resins, aromatic vinyl polymers, and the like are suitable. Aromatic vinyl polymers are particularly suitable for summer tires, while terpene-based resins are particularly suitable for studless winter tires.

Examples of the terpene-based resin include terpene resin and terpene phenol resin. The terpene-based resin preferably has a softening point of 51°C to 140°C, more preferably 90°C to 130°C.

The aromatic vinyl polymer preferably has a softening point of 100°C or lower, more preferably 92°C or lower, and still more preferably 88°C or lower, but preferably 30°C or higher, more preferably 60°C or higher, and still more preferably 75°C or higher. When the aromatic vinyl polymer has a softening point within the range described above, good wet grip performance can be obtained, thereby resulting in an improved balance of the above-mentioned properties. As used herein, softening point is determined as set forth in JIS K 6220 with a ring and ball softening point measuring apparatus and is defined as the temperature at which the ball drops down.

The aromatic vinyl polymer preferably has a weight average molecular weight (Mw) of 400 or greater, more preferably 500 or greater, and still more preferably 800 or greater, but preferably 10000 or smaller, more preferably 3000 or smaller, and still more preferably 2000 or smaller. When the aromatic vinyl polymer has a Mw within the range described above, the effect of the present invention can be well achieved. As used herein, weight average molecular weight is measured using a gel permeation chromatograph (GPC) and calibrated with polystyrene standards.

The amount of the resin per 100 parts by mass of the rubber component is preferably 2 parts by mass or more, and more preferably 5 parts by mass or more. If the amount is less than 2 parts by mass, such an addition may not be sufficiently effective. The amount is also preferably 50 parts by mass or less, and more preferably 25 parts by mass or less. If the amount is more than 50 parts by mass, abrasion resistance tends to be deteriorated.

The tread rubber composition may contain, in addition to the components described above, compounding agents conventionally used in the rubber industry, such as other reinforcing fillers, wax, antioxidants, age resistors, stearic acid, and zinc oxide. Vulcanization accelerators such as guanidine, aldehyde-amine, aldehyde-ammonia, thiazole, sulfenamide, thiourea, dithiocarbamate, and xanthate vulcanization accelerators may also be used.

### (Wing rubber composition and sidewall rubber composition)

In the wing or sidewall rubber composition, the total net sulfur content derived from crosslinking agents is 1.3 to 2.5 parts by mass per 100 parts by mass of the rubber component. If the content is less than 1.3 parts by mass, a large amount of vulcanization accelerator tends to be needed, resulting in lower elongation at break. If the content is more than 2.5 parts by mass, after oxidation degradation, elastic modulus E* tends to increase, while elongation at break EB tends to decrease. This rather tends to result in deteriorated durability. In addition, particularly in the case of the tire for trucks and buses, the difference in the concentration from the adjacent sidewall or ply tends to be large, leading to a further decrease in durability. The total net sulfur content is preferably 1.4 to 2.0 parts by mass.

Any rubber component may be used in the wing or sidewall rubber composition. The diene rubbers as mentioned for the tread rubber composition can be used. In particular, BR, isoprene-based rubbers, and SBR are preferred as they provide good durability while ensuring good handling stability, good fuel economy, and good elongation at break. It is more preferred to use BR and an isoprene-based rubber in combination. Suitable examples of the BR include high-cis BR (Co-catalyzed BR, Nd-catalyzed BR, etc.), SPB-containing BR, and tin-modified BR. The isoprene-based rubbers and the SBR may be as described above.

The amount of BR based on 100% by mass of the rubber component is preferably 25% by mass or more, and more preferably 30% by mass or more. The amount of BR is preferably 75% by mass or less, and more preferably 65% by mass or less. When the amount of BR falls within the range described above, good flex crack growth resistance and good durability can be obtained while ensuring good handling stability, fuel economy, and elongation at break.

In the wing or sidewall rubber composition, the amount of isoprene-based rubber based on 100% by mass of the rubber component is preferably 25% to 65% by mass, and more preferably 35% to 55% by mass. In the case of adding SBR, the amount of SBR is preferably 15% to 40% by mass, and more preferably 20% to 35% by mass.

The wing or sidewall rubber composition may contain carbon black. When carbon black is added, the amount may be appropriately set depending on the properties required for sidewalls or wings, such as flex crack growth resistance. The amount is preferably 20 to 80 parts by mass, and more preferably 30 to 60 parts by mass, per 100 parts by mass of the rubber component.

The wing or sidewall rubber composition may contain, in addition to the rubber component and carbon black, the compounding materials as mentioned for the tread rubber composition.

### (Pneumatic tire)

The pneumatic tire of the present invention can be produced by conventional methods, such as the one described below.

First, the components other than the crosslinking agent(s) and vulcanization accelerators are compounded (or added) and kneaded in a rubber kneader such as a Banbury mixer or an open roll mill (base kneading step) to give a kneaded mixture. Subsequently, the crosslinking agent(s) and a vulcanization accelerator(s) are compounded with (or added to) the kneaded mixture, followed by kneading. In this way, an unvulcanized tread, wing, or sidewall rubber composition is prepared.

Next, the thus prepared unvulcanized rubber compositions are extruded into the shape of a tread, wing, or sidewall; the extrudates are formed together with other tire components on a tire building machine to build an unvulcanized tire; and the unvulcanized tire is then heated and pressed in a vulcanizer, whereby a pneumatic tire can be produced.

The pneumatic tire of the present invention is suitable for passenger vehicles, large passenger vehicles, large SUVs, heavy load vehicles such as trucks and buses, and light trucks. The pneumatic tire can be used as any of the summer tires or studless winter tires for these vehicles.

### EXAMPLES

The present invention is more specifically described with reference to, but not limited to, examples of tires for passenger vehicles having a TOS structure.

### <Preparation of chain end modifier>

A 100-mL measuring flask was charged with 23.6 g of 3-(N,N-dimethylamino)propyltrimethoxysilane available from AZmax. Co. in a nitrogen atmosphere, and was further charged with anhydrous hexane available from Kanto Chemical Co., Inc. to thereby prepare a chain end modifier in a total amount of 100 mL.

<Copolymer Preparation 1>

A sufficiently nitrogen-purged, 30-L pressure-resistant vessel was charged with 18 L of n-hexane, 740 g of styrene available from Kanto Chemical Co., Inc., 1260 g of butadiene, and 10 mmol of tetramethylethylenediamine, and then the temperature was raised to 40°C. Next, 10 mL of butyllithium was added to the mixture, and then the temperature was raised to 50°C, followed by stirring for three hours. Subsequently, 11 mL of the chain end modifier was added to the resulting mixture, followed by stirring for 30 minutes. After 15 mL of methanol and 0.1 g of 2,6-tert-butyl-p-cresol were added to the reaction mixture, the reaction mixture was put in a stainless steel vessel containing 18 L of methanol and then a coagulum was collected. The coagulum was dried under reduced pressure for 24 hours to give a modified SBR. The modified SBR had a Mw of 270,000, a vinyl content of 56%, and a styrene content of 37% by mass.

The Mw, vinyl content, and styrene content of the modified SBR were analyzed by the methods described below.

### <Measurement of weight average molecular weight (Mw)>

The weight average molecular weight (Mw) of the modified SBR was measured using a gel permeation chromatograph (GPC) (GPC-8000 series available from Tosoh Corporation, detector: differential refractometer, column: TSKGEL SUPERMALTPORE HZ-M available from Tosoh Corporation) and calibrated with polystyrene standards.

### <Measurement of vinyl content and styrene content>

The structure of the modified SBR was identified using a device of JNM-ECA series available from JEOL Ltd. The vinyl content and the styrene content in the modified SBR were calculated from the results.

The chemicals used in the examples and comparative examples are listed below.
NR: TSR20
BR (1): CB25 (high-cis BR synthesized with Nd catalyst; Tg: -110°C) available from LANXESS
BR (2): BR150B (high-cis BR synthesized with Co catalyst;
Tg: -108°C) available from Ube Industries, Ltd.
BR (3): VCR617 available from Ube Industries, Ltd.
BR (4): Nipol BR1250H available from ZEON CORPORATION
SBR (1): Modified SBR prepared in Copolymer Preparation 1
SBR (2): SBR 1502 (E-SBR) available from JSR Corporation
Carbon black (1): HP160 (N₂SA: 165 m²/g) available from Columbia Carbon
Carbon black (2): SHOBLACK N550 available from Cabot Japan K.K.
Silica: ULTRASIL VN3 (N₂SA: 175 m²/g) available from Evonik
Aluminum hydroxide (1): C-301N (average particle size: 1.0 µm, nitrogen adsorption specific surface area: 4.0 m²/g,
Mohs hardness: 3) available from Sumitomo Chemical Co., Ltd.
Aluminum hydroxide (2): ATH #C (average particle size: 0.8 µm, nitrogen adsorption specific surface area: 7.0 m²/g,
Mohs hardness: 3) available from Sumitomo Chemical Co., Ltd.
Aluminum hydroxide (3): ATH #B (average particle size: 0.6 µm, nitrogen adsorption specific surface area: 15 m²/g,
Mohs hardness: 3) available from Sumitomo Chemical Co., Ltd.
Aluminum hydroxide (4): Dry ground product of ATH #B (average particle size: 0.4 µm, nitrogen adsorption specific surface area: 34 m²/g, Mohs hardness: 3)
Aluminum hydroxide (5): Dry ground product of ATH #B (average particle size: 0.23 µm, nitrogen adsorption specific surface area: 55 m²/g, Mohs hardness: 3)
Resin 1 (grip resin 1): SYLVARES SA85 (copolymer of α-methylstyrene and styrene, softening point: 85°C, Mw: 1,000) available from Arizona Chemical
Resin 2 (grip resin 2): YS resin PX1150N (terpene resin (pinene polymer), softening point: 115°C) available from YASUHARA CHEMICAL CO., LTD.
Resin 3 (grip resin 3): SYLVARES TP115 (terpene phenol resin, softening point: 115°C) available from Arizona chemical
Oil: Vivatec 500 (TDAE) available from H&R
Wax: Ozoace 0355 available from Nippon Seiro Co., Ltd.
Antioxidant (1): ANTIGENE 6C (N-(1,3-dimethylbutyl)-N'-phenyl-p-phenylenediamine) available from Sumitomo Chemical Co., Ltd.
Antioxidant (2): NOCRAC 224 (2,2,4-trimethyl-1,2-dihydroquinoline polymer) available from Ouchi Shinko Chemical Industrial Co., Ltd.
Stearic acid: Stearic acid "Tsubaki" available from NOF Corporation
Zinc oxide: Ginrei R available from Toho Zinc Co., Ltd.
Silane coupling agent (1): NXTZ 45 available from Momentive
Silane coupling agent (2): Si75 available from Evonik
Crosslinking agent (1): Vulcuren VP KA 9188 (1,6-bis(N,N'-dibenzylthiocarbamoyldithio)hexane, sulfur content: 20.6% by mass) available from LANXESS
Crosslinking agent (2): DURALINK HTS (hexamethylene-1,6-bis(thiosulfate) disodium salt dihydrate (organic thiosulfate compound), sulfur content: 56% by mass) available from Flexsys
Crosslinking agent (3): Tackirol V200 (alkylphenol-sulfur chloride condensate, sulfur content: 24% by mass) available from Taoka Chemical Co., Ltd.
Crosslinking agent (4): HK-200-5 (powdered sulfur containing 5% by mass of oil) available from Hosoi Chemical Industry Co., Ltd.
Vulcanization accelerator (1): Nocceler NS-G (N-tert-butyl-2-benzothiazolylsulfenamide) available from Ouchi Shinko Chemical Industrial Co., Ltd.
Vulcanization accelerator (2): Nocceler DZ (N,N-dicyclohexyl-2-benzothiazolylsulfenamide) available from Ouchi Shinko Chemical Industrial Co., Ltd.
Vulcanization accelerator (3): Nocceler D (1,3-diphenylguanidine) available from Ouchi Shinko Chemical Industrial Co., Ltd.

### <Examples and Comparative Examples>

### (Tread rubber composition)

According to the formulations for summer tires in Table 1 and for studless winter tires in Table 2, first, the whole amounts of the rubber component and carbon black, half the amount of silica, and half the amount of silane coupling agent were kneaded for five minutes at 150°C using a Banbury mixer. Then, the remaining materials other than crosslinking agents and vulcanization accelerators were kneaded for four minutes at 150°C to give a kneaded mixture (base kneading step). Then, the crosslinking agent(s) and the vulcanization accelerators were added to the kneaded mixture, followed by kneading using an open roll mill for four minutes at 105°C to prepare an unvulcanized rubber composition (final kneading step).

The unvulcanized rubber composition was press-vulcanized for 12 minutes at 170°C to prepare a vulcanized tread rubber composition.

### (Wing rubber composition)

According to the formulations shown in Table 3, the materials other than crosslinking agents and vulcanization accelerators were kneaded for five minutes at 170°C using a Banbury mixer to give a kneaded mixture (base kneading step). Then, the crosslinking agent(s) and the vulcanization accelerator(s) were added to the kneaded mixture, followed by kneading using an open roll mill for four minutes at 105°C to prepare an unvulcanized rubber composition (final kneading step).

The unvulcanized rubber composition was press-vulcanized for 12 minutes at 170°C to prepare a vulcanized wing rubber composition.

### (Pneumatic tire)

Moreover, the thus-prepared unvulcanized tread rubber compositions and unvulcanized wing rubber compositions were each extruded into the shape of the corresponding tire component; and each set of extrudates was assembled with other tire components on a tire building machine and then placed into a predetermined mold, followed by vulcanization for 12 minutes at 170°C to prepare a test tire (tire size: 245/40R18, for passenger vehicles) (curing step). Table 4 shows the net sulfur content ratios [(the net sulfur content in the wing rubber composition)/(the net sulfur content in the tread rubber composition)] of the thus-prepared test tires.

The unvulcanized and vulcanized tread rubber compositions, the unvulcanized and vulcanized wing rubber compositions, and the test tires were evaluated as follows. Tables 1 to 3 and 5 show the evaluation results.

### (Cure rate)

Each unvulcanized rubber composition was subjected to a cure test at a measurement temperature of 160°C using an oscillating curemeter (curelastometer) described in JIS K 6300, and then a cure rate curve plotting torque versus time was prepared. A time t10 (min) at which the torque reached ML + 0.1ME was calculated from the cure rate curve, wherein ML is the minimum torque, MH is the maximum torque, and ME is the difference therebetween (MH - ML).

### (Viscoelasticity test)

The complex elastic modulus E* (MPa) and the loss tangent tan δ of the vulcanized rubber compositions were measured using a viscoelastic spectrometer VES (Iwamoto Seisakusho Co., Ltd.) at a temperature of 40°C, a frequency of 10 Hz, an initial strain of 10%, and a dynamic strain of 2%. A higher E* indicates higher rigidity and therefore better handling stability. A lower tan δ indicates lower heat build-up and therefore better fuel economy.

### (Tensile test)

No. 3 dumbbell specimens prepared from the vulcanized rubber compositions were subjected to a tensile test at room temperature in accordance with JIS K 6251 "Rubber, vulcanized or thermoplastic - Determination of tensile stress-strain properties" to measure the elongation at break EB (%). A greater EB indicates better elongation at break (better durability).

### (Abrasion resistance)

The test tires were mounted on a front-engine, rear-wheel-drive (FR) car with a displacement of 2000 cc made in Japan, and the vehicle was driven on a test track with a dry asphalt surface. Then, the remaining groove depth in the tire tread rubber (initial depth: 8.0 mm) was measured to evaluate abrasion resistance. The larger the remaining groove depth is, the higher the abrasion resistance is. The remaining groove depths are expressed as an index (abrasion resistance index), wherein the value of the tread rubber composition 16 is set equal to 100 in the case of the summer tire formulations in Table 1; the value of the tread rubber composition 24 is set equal to 100 in the case of the studless winter tire formulations in Table 2. A higher index indicates higher abrasion resistance. Good abrasion resistance is ensured with an index of 95 or higher.

### (Wet grip performance)

The test tires were mounted on a front-engine, rear-wheel-drive (FR) car with a displacement of 2000 cc made in Japan. A test driver drove the car 10 laps around a test track with a wet asphalt surface, and then evaluated the control stability during steering. The results are expressed as an index (wet grip index), wherein the value of the tread rubber composition 16 is set equal to 100 in the case of the summer tire formulations in Table 1; the value of the tread rubber composition 24 is set equal to 100 in the case of the studless winter tire formulations in Table 2. A higher index indicates better wet grip performance. Good wet grip performance is ensured with an index of 110 or higher.

### (Condition of finished bonding surface between tread and wing)

The condition of the finished bonding surface of each test tire was evaluated using an index, in terms of extrudability of the wing rubber around the surface bonded to the tread, and curling, peel-off, and falling of a thin film of the wing rubber, as well as bareness (i.e., keloidal appearance). If the extrudability is good, the wing rubber has less heat build-up and can maintain its shape with predetermined dimensions, smooth edges (without edge irregularities) and uniform thicknesses. Here, ten tires were produced and used to evaluate the condition of the finished product using an index. The finish index 100 indicates being process-compatible. The finish index 110 indicates being excellent in the stability and uniformity of the finished dimensions as well. The finish index 90 indicates frequent occurrence of problems and instability of the finished dimensions even in one tire, which means that the product is not process-compatible.

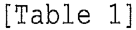

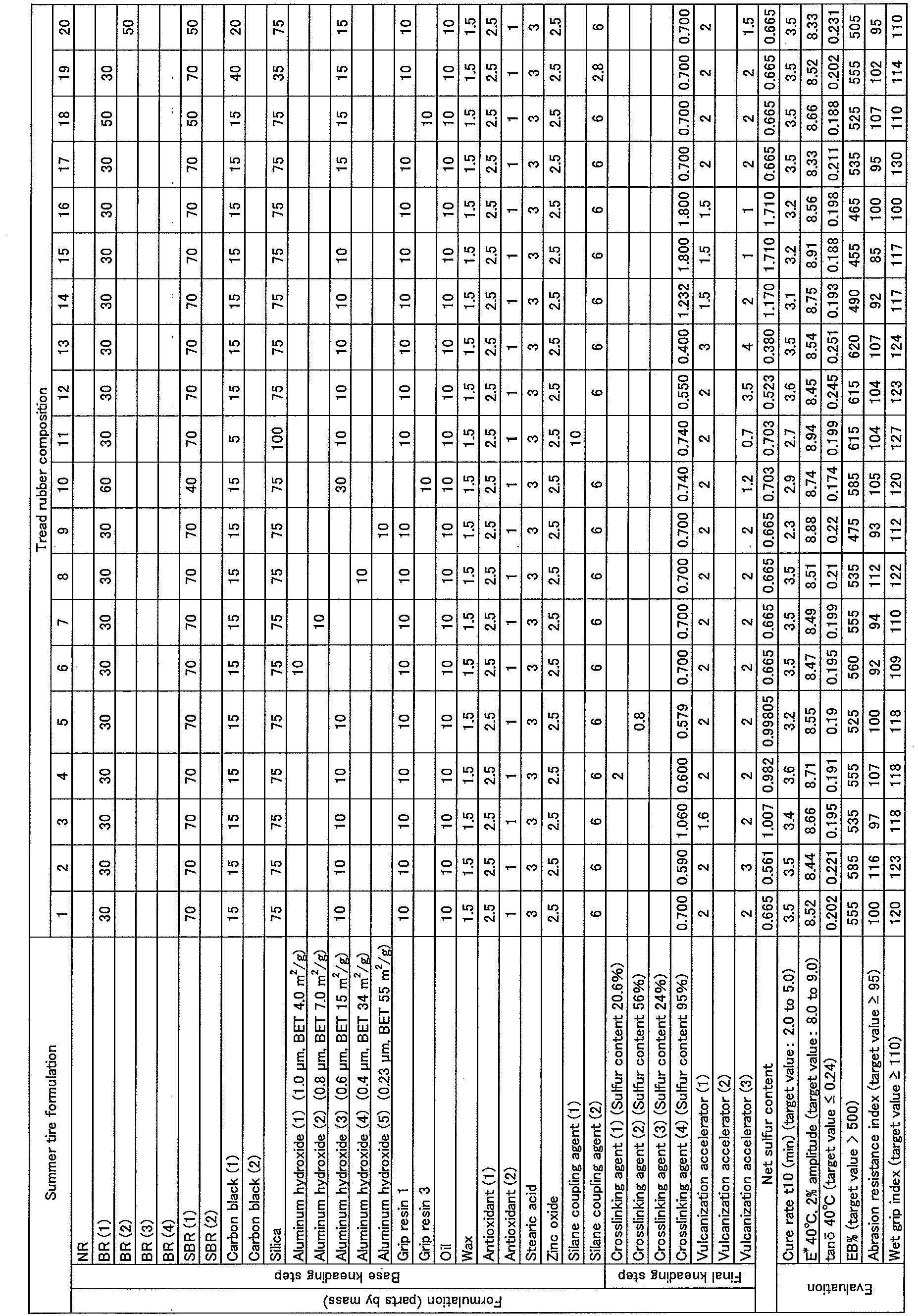

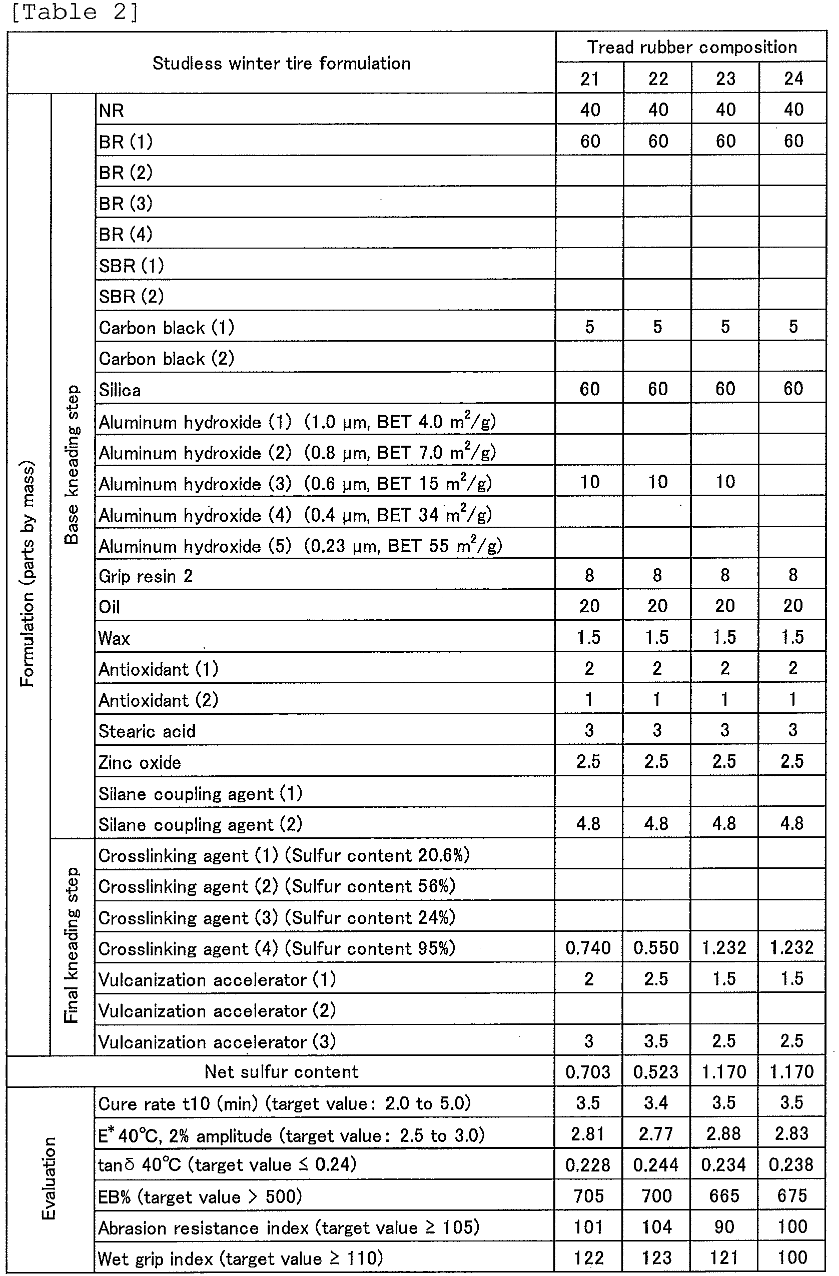

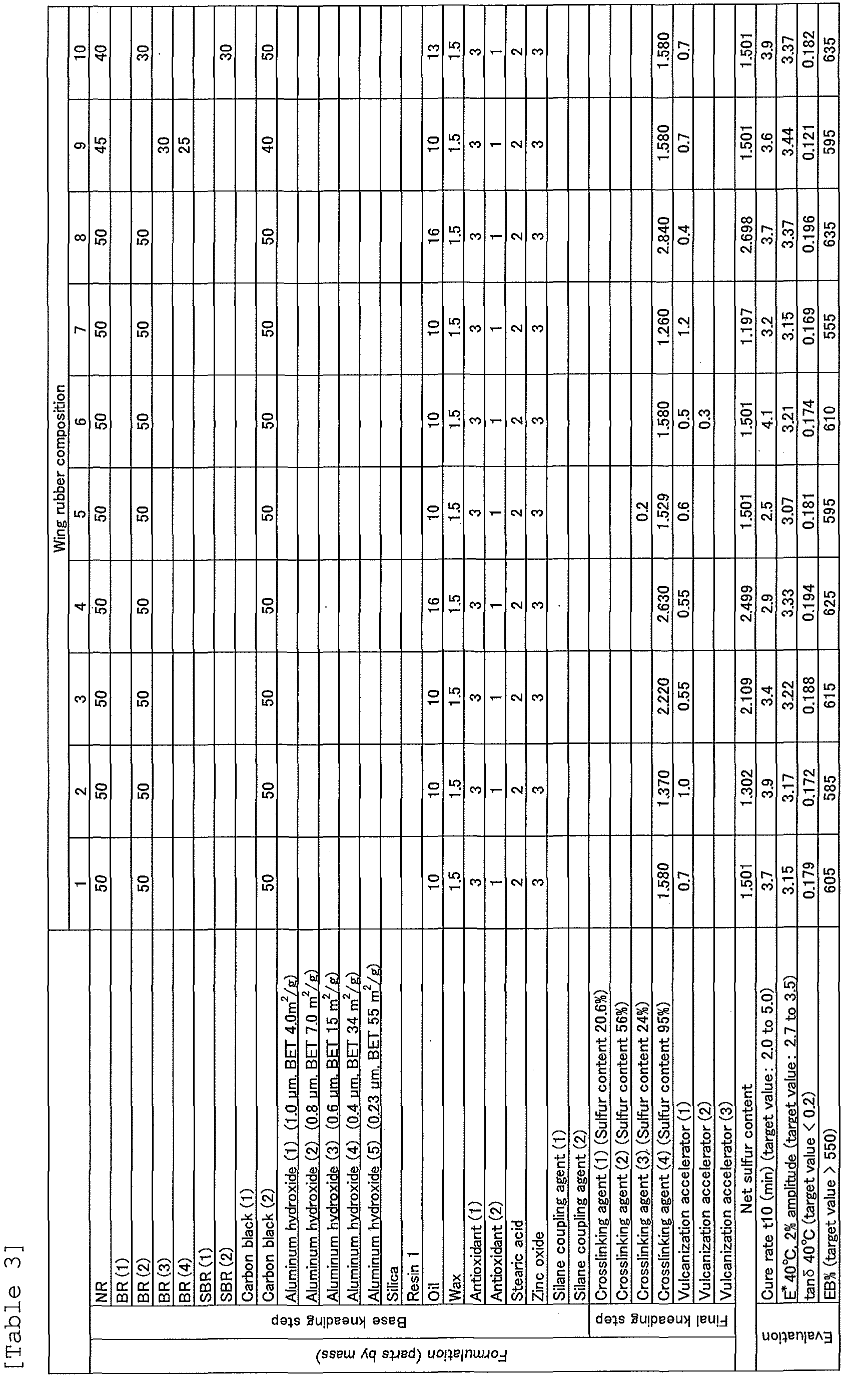

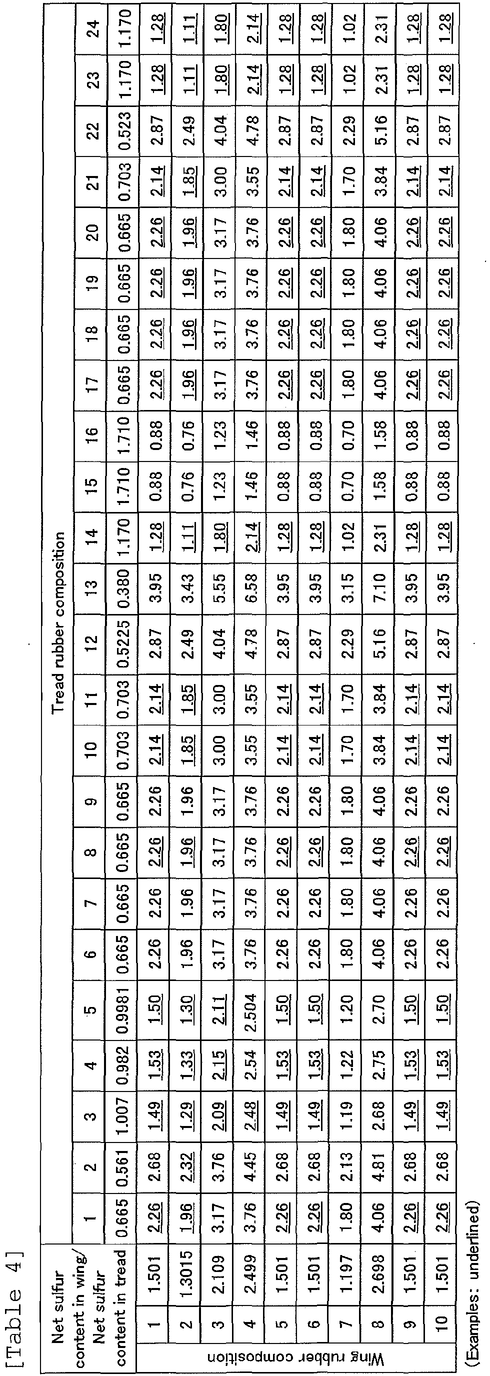

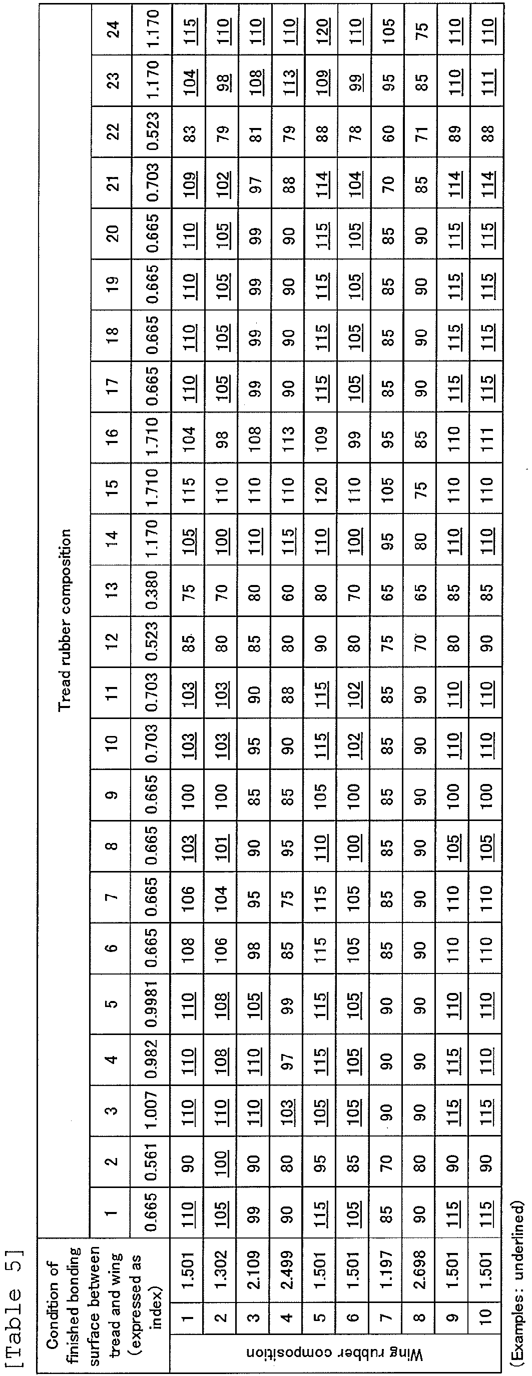

The results of the evaluation of finish index in Table 5 and of abrasion resistance and wet grip performance in Tables 1 and 2 clearly show that when a predetermined amount of a specific aluminum hydroxide was added to a tread, the net sulfur content in the tread and the net sulfur content in a wing were each set to a specific amount, and the ratio of these contents had a specific relationship, wet grip performance and the condition of the finished product were improved while ensuring good abrasion resistance. Good handling stability (E*), good fuel economy (tan δ), and good durability (EB) were also exhibited in the examples.

Furthermore, although the above description only illustrates examples of tires for passenger vehicles (TOS structure) in which the present invention was applied to the tread and the wing, the same effects were achieved in tires (e.g., tires for trucks and busses having a SOT structure) in which the present invention was applied to the tread and the sidewall.

## Claims

1. A pneumatic tire, comprising a tread and a wing or sidewall adjacent to the tread,
the tread being formed from a tread rubber composition that has an amount of aluminum hydroxide having an average particle size of 0.69 µm or smaller and a nitrogen adsorption specific surface area of 10 to 50 m²/g of 1 to 60 parts by mass, and a net sulfur content derived from crosslinking agents of 0.56 to 1.15 parts by mass, each per 100 parts by mass of a rubber component in the tread rubber composition,
the wing or sidewall being formed from a wing or sidewall rubber composition that has a net sulfur content derived from crosslinking agents of 1.3 to 2.5 parts by mass per 100 parts by mass of a rubber component in the wing or sidewall rubber composition,
the net sulfur content derived from crosslinking agents in the tread rubber composition and the net sulfur content derived from crosslinking agents in the wing or sidewall rubber composition satisfying the following relationship: (the net sulfur content derived from crosslinking agents in the wing or sidewall rubber composition)/(the net sulfur content derived from crosslinking agents in the tread rubber composition) ≤ 2.5.

2. The pneumatic tire according to claim 1,
wherein the tread comprises, per 100 parts by mass of the rubber component, 20 to 130 parts by mass of wet silica having a nitrogen adsorption specific surface area of 40 to 350 m²/g.

3. The pneumatic tire according to claim 1 or 2,
wherein the tread comprises, based on 100% by mass of the rubber component, 20% to 70% by mass of polybutadiene rubber synthesized with a rare earth catalyst.

## Patentansprüche

1. Luftreifen, umfassend eine Lauffläche und eine Flanke oder Seitenwand benachbart zu der Lauffläche,
wobei die Lauffläche aus einer Laufflächenkautschukzusammensetzung gebildet ist, die eine Menge an Aluminiumhydroxid mit einer durchschnittlichen Partikelgröße von 0,69 µm oder kleiner und einer spezifischen Stickstoffadsorptionsoberfläche von 10 bis 50 m²/g von 1 bis 60 Masseteilen und einen Nettoschwefelgehalt, der von Vernetzungsmitteln abstammt, von 0,56 bis 1,15 Masseteilen, jeweils bezogen auf 100 Masseteile einer Kautschukkomponente in der Laufflächenkautschukzusammensetzung aufweist,
die Flanke oder Seitenwand aus einer Flanken- oder Seitenwandkautschukzusammensetzung gebildet ist, die einen Nettoschwefelgehalt, der von Vernetzungsmitteln abstammt, von 1,3 bis 2,5 Masseteilen bezogen auf 100 Masseteile einer Kautschukkomponente in der Flanken- oder Seitenwandkautschukzusammensetzung aufweist,
der Nettoschwefelgehalt, der von Vernetzungsmitteln abstammt, in der Laufflächenkautschukzusammensetzung und der Nettoschwefelgehalt, der von Vernetzungsmitteln in der Flanken- oder Seitenwandkautschukzusammensetzung abstammt, die folgende Beziehung erfüllen:
(der Nettoschwefelgehalt, der von Vernetzungsmitteln in der Flanken- oder Seitenwandkautschukzusammensetzung abstammt)/(der Nettoschwefelgehalt, der von Vernetzungsmitteln in der Laufflächenkautschukzusammensetzung abstammt) ≤ 2,5.

2. Luftreifen nach Anspruch 1, wobei die Lauffläche bezogen auf 100 Masseteile der Kautschukkomponente 20 bis 130 Masseteile nasses Siliciumdioxid mit einer spezifischen Stickstoffadsorptionsoberfläche von 40 bis 350 m²/g aufweist.

3. Luftreifen nach Anspruch 1 oder 2, wobei die Lauffläche bezogen auf 100 Masseteile der Kautschukkomponente 20 Masse-% bis 70 Masse-% mit einem Seltenerdenkatalysator synthetisierten Polybutadienkautschuk umfasst.

## Revendications

1. Bandage pneumatique, comprenant une bande de roulement et une aile ou une paroi latérale adjacente à la bande de roulement,
la bande de roulement étant formée d'une composition au caoutchouc pour bande de roulement qui comprend une quantité d'hydroxide d'aluminium ayant une taille de particules moyennes de 0,69 µm ou moins et une aire spécifique d'adsorption d'azote de 10 à 50 m²/g de 1 à 60 parties en masse, et une teneur nette en soufre dérivée des agents de réticulation de 0,56 à 1,15 parties en masse, à chaque fois pour 100 parties en masse d'un composant caoutchouc dans la composition au caoutchouc pour bande de roulement,
l'aile ou la paroi latérale est formée d'une composition au caoutchouc pour aile ou pour paroi latérale qui comprend une teneur nette en soufre dérivée des agents de réticulation de 1,3 à 2,5 parties en masse pour 100 parties en masse d'un composant caoutchouc dans la composition au caoutchouc pour aile ou pour paroi latérale, et
la teneur nette en soufre dérivé des agents de réticulation dans la composition au caoutchouc pour bande de roulement et la teneur nette en soufre dérivée des agents de réticulation dans la composition au caoutchouc pour aile ou pour paroi latérale satisfont la relation suivante : [teneur de soufre nette dérivée des agents de réticulation dans la composition au caoutchouc pour aile ou pour paroi latérale]/[teneur nette en soufre dérivé des agents de réticulation dans la composition au caoutchouc pour bande de roulement] ≤ 2,5.

2. Bandage pneumatique selon la revendication 1,
dans lequel la bande de roulement comprend, pour 100 parties en masse du composant au caoutchouc, 20 à 130 parties en masse d'une silice humide ayant une aire spécifique d'adsorption d'azote de 40 à 350 m²/g.

3. Bandage pneumatique selon la revendication 1 ou 2,
dans lequel la bande de roulement comprend, sur la base de 100 % en masse du composant au caoutchouc, de 20 % à 70 % en masse de caoutchouc polybutadiène synthétisé avec un catalyseur en terres rares.
